# NOUVEAU FASCICULE DE BREVET EUROPEEN

(11) **EP 3 230 185 B2**
(45) Date de publication et mention de la décision concernant l'opposition: **07.06.2023**
(45) Mention de la délivrance du brevet: 12.08.2020
(21) Numéro de dépôt: 15820560.9
(22) Date de dépôt: 01.12.2015
(51) Int. Cl.: B65G 47/86, B65C 9/06

(54) **DISPOSITIF D'ORIENTATION D'UN RÉCIPIENT COMPORTANT DEUX GALETS D'ENTRAÎNEMENT DU RÉCIPIENT**
VORRICHTUNG ZUR HERSTELLUNG EINES BEHÄLTERS MIT ZWEI ROLLEN ZUR ANSTEUERUNG EINES BEHÄLTERS
DEVICE FOR OBTAINING A CONTAINER INCLUDING TWO ROLLERS FOR DRIVING A CONTAINER

(30) Priorité: 08.12.2014 FR 1462040
(43) Date de publication de la demande: 18.10.2017
(73) Titulaire: Sidel Participations, 76930 Octeville-sur-Mer (FR)
(72) Inventeur: BILLAULT, Romain, 76930 Octeville-sur-Mer (FR)
(74) Mandataire: Sidel Group
(86) Numéro de dépôt international: PCT/FR2015/053270
(87) Numéro de publication internationale: WO 2016/092180

(56) Documents cités:
- DE-A1- 2 740 220
- FR-A- 1 539 990
- US-A- 2 528 860
- US-A- 4 468 277

## Description

### DOMAINE TECHNIQUE DE L'INVENTION

L'invention se rapporte à un dispositif d'orientation d'au moins un récipient autour de son axe d'orientation verticale pour un récipient muni d'un tronçon de préhension, le dispositif comportant au moins une pince de préhension du récipient montée mobile le long d'une trajectoire déterminée, la pince comportant :
- au moins deux mors susceptibles d'occuper une première position de pincement du tronçon de préhension dans laquelle le tronçon de préhension est guidé en rotation autour de son axe par rapport aux mors, et une position de relâchement du récipient ;
- un premier galet d'entraînement en rotation du récipient saisi par la pince par roulement dudit galet d'entraînement contre le tronçon de préhension ;
- un organe commandé de mise en rotation du premier galet d'entraînement.

### ARRIERE PLAN TECHNIQUE DE L'INVENTION

Il est connu de réaliser des récipients en matériau thermoplastique par soufflage de préformes préalablement chauffées.

La production en grande série de tels récipients est réalisée au moyen d'une station de soufflage qui est équipée de nombreux moules de soufflage. Le grand nombre de moules permet de produire les récipients à une cadence élevée. Les moules sont par exemple portés par un carrousel qui tourne de manière que les préformes soient soufflées les unes après les autres à grande cadence pendant leur déplacement entre un point d'introduction correspondant à l'introduction des préformes dans un moule associé, et un point de démoulage correspondant à l'éjection des récipients formés à l'extérieur des moules.

Les récipients ainsi obtenus sont réceptionnés à leur sortie de moule par des moyens de préhension d'une roue de transfert afin qu'ils soient acheminés à la file vers un autre dispositif via, par exemple, un convoyeur. La station suivante est par exemple une station de remplissage des récipients ou une station d'étiquetage ou de marquage des récipients.

Il est parfois nécessaire de modifier l'orientation angulaire des récipients avant de les envoyer vers la station suivante. Une telle modification de l'orientation angulaire est notamment nécessaire pour des récipients présentant au moins un tronçon qui n'est pas cylindrique de révolution.

Les stations sont généralement elles-mêmes équipées de moyens de transport des récipients, tels que des carrousel. La modification de l'orientation angulaire du récipient peut aussi intervenir directement sur ces moyens de transport, et pas uniquement sur des moyens de transfert entre deux stations.

Pour faire pivoter un récipient, il est connu d'équiper une roue de transfert de bras articulés dont chacun comporte des moyens de préhension d'un récipient. Lors de la rotation de la roue de transfert, les bras pivotent de manière à modifier l'orientation angulaire du récipient avant de le transférer au moyen de convoyage suivant.

Un tel dispositif permet de faire pivoter les récipients de manière satisfaisante. Néanmoins, le débattement nécessaire pour le pivotement de chaque bras oblige à prévoir un écartement suffisant entre chaque bras, au détriment de la compacité de la roue de transfert.

En outre, un tel dispositif comporte de nombreuses pièces mobiles qui sont onéreuses à fabriquer puis à assembler.

De plus, ces bras présentent un poids et un encombrement qui est susceptible de limiter la cadence de défilement des récipients.

Enfin, un tel dispositif à bras articulé est difficilement adaptable à différents formats de récipients. Il est en effet nécessaire de modifier de nombreuses pièces, telles que des cames, en cas de changement de format.

DE 27 40 220 décrit un dispositif d'orientation selon le préambule de la revendication 1.

### BREF RESUME DE L'INVENTION

La présente invention propose un dispositif d'orientation selon la revendication 1.

Selon d'autres caractéristiques de l'invention :
- le deuxième galet d'entraînement est décalé circonférentiellement par rapport au premier galet d'entraînement ;
- le deuxième galet d'entraînement est agencé dans un même plan que le premier galet d'entraînement ;
- le premier galet d'entraînement et le deuxième galet d'entraînement sont mis simultanément en rotation par ledit organe de mise en rotation ;
- l'organe de mise en rotation comporte un élément tournant autour d'un axe vertical qui est mobile solidairement avec la pince, et qui comporte au moins deux faces périphériques en arc de cercle dont chacune est destinée à rouler sans glissement contre un galet d'entraînement associé lorsque la pince occupe sa position de pincement ;
- l'organe de mise en rotation comporte un maneton qui est agencé de manière excentrique par rapport à l'axe de rotation de l'élément tournant, le dispositif comportant aussi une came fixe qui permet de commander la rotation de l'élément tournant par contact du maneton avec la came lors du déplacement de la pince le long de sa trajectoire.
- l'élément tournant est muni de moyens de rappel élastiques qui contraignent le maneton contre la came ;
- la pince est destinée à saisir le récipient par son col ;
- les mors comportent des faces de glissement qui sont destinées à guider le récipient en rotation par glissement ;
- les mors comportent au moins un galet de guidage libres en rotation qui est destiné à guider le récipient en rotation de manière roulante par rapport à la pince ;
- les galets de guidage sont agencés au même niveau que les galets d'entraînement, le récipient étant porté en coopération par les galets d'entraînement et par les galets de guidage ;
- le dispositif comporte des moyens de réglage de la position de l'élément tournant par rapport à la pince associée ;
- les pinces sont mobiles le long d'une trajectoire fermée, et en ce que la came est conçue pour faire pivoter l'élément tournant sur une course angulaire délimitée entre une première position angulaire extrême et une deuxième position angulaire extrême ;
- le dispositif est équipé de moyens de butée en pivotement du récipient qui sont destinés à coopérer avec une face de butée du récipient pour arrêter son pivotement dans une position angulaire déterminée.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :
- la figure 1 est une vue de dessus qui représente un dispositif d'orientation de récipients sur lequel une seule pince a été représentée pour des raisons de clarté ;
- la figure 2 est une vue en perspective qui représente un récipient qui est adapté pour être pris en charge par le dispositif d'orientation de la figure 1 ;
- la figure 3 est une vue en coupe selon le plan de coupe 3-3 de la figure 1 qui représente des galets de la pince en position de pincement du col du récipient ;
- la figure 4 est une vue de dessous qui représente la pince de la figure 1 et dans laquelle un organe de mise en rotation des galets d'entraînement n'a pas été représenté pour permettre de montrer uniquement la pince ;
- la figure 5 est une vue similaire à celle de la figure 4 dans laquelle l'organe de mise en rotation des galets d'entraînement a été représenté ;
- la figure 6 est une vue en coupe selon le plan de coupe 6-6 de la figure 1 dans laquelle le récipient n'a pas été représenté ;
- la figure 7 est une vue en perspective qui représente la pince de la figure 1 équipée de l'organe de mise en rotation des galets d'entraînement ;
- les figures 8 à 12 sont des vues de dessous qui représentent des étapes successives de changement d'orientation d'un récipient pris en charge par le dispositif d'orientation de la figure 1.

### DESCRIPTION DETAILLEE DES FIGURES

Dans la suite de la description, on adoptera à titre non limitatif des orientations longitudinale, verticale et transversale indiquées par le trièdre "L,V,T" des figures. Ce repère est associé à la pince qui est décrite par la suite.

Dans la suite de la description, des éléments présentant une structure identique ou des fonctions analogues seront désignés par une même référence.

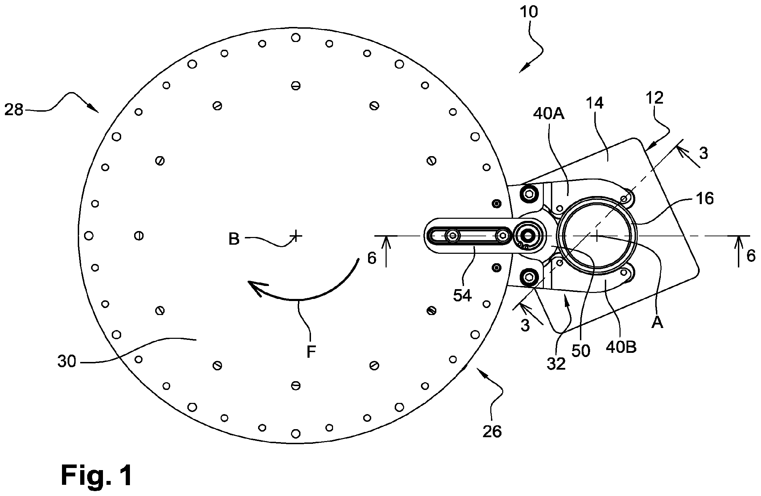

On a représenté à la figure 1 un dispositif 10 d'orientation d'un récipient 12 autour de son axe "A" principal d'orientation verticale.

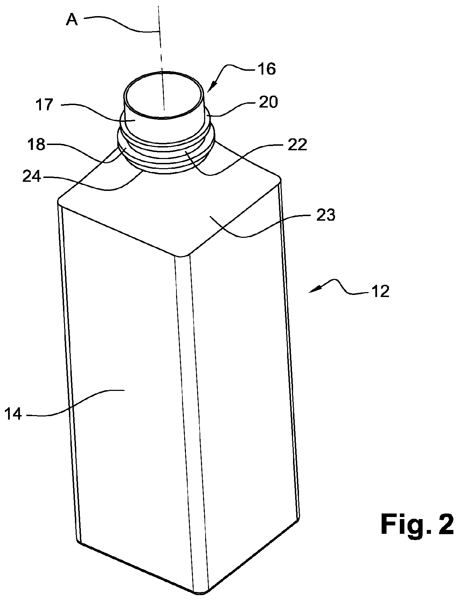

Comme représenté à la figure 2, le récipient 12 comporte un corps 14 inférieur qui est ouvert vers le haut par l'intermédiaire d'un col 16 supérieur.

Le col 16 supérieur présente une face 17 externe de forme globalement cylindrique de section transversale circulaire centrée sur l'axe "A" principal du récipient 12.

Le col 16 comporte à sa base une première collerette 18 inférieure et une deuxième collerette 20 supérieure qui font toutes les deux saillie radialement par rapport à la face 17 externe.

Les deux collerettes 18, 20 sont écartées verticalement de manière à définir une gorge 22. Cette gorge 22 est notamment destinée à recevoir une bague d'inviolabilité (non représentée) lors du bouchage du récipient 12.

La transition entre le corps 14 et le col 16 est formé par un épaulement 23 pyramidale à sa base et conique à son extrémité supérieure.

Le tronçon 24 de face 17 externe délimité entre la collerette 18 inférieure et l'épaulement 23 présente une forme cylindrique de révolution centrée sur l'axe "A" du récipient. Ce tronçon 24 sera par la suite appelé "tronçon 24 de préhension".

Le corps 14 du récipient 12 présente au moins un tronçon qui n'est pas cylindrique de révolution. Dans l'exemple représenté, le corps 14 présente une section transversale de forme carré sur toute sa hauteur.

En variante non représentée de l'invention, le tronçon de préhension est formé par le fond de la gorge.

En se reportant à la figure 1, le dispositif 10 d'orientation du récipient 12 est destiné à convoyer le récipient d'un point 26 d'entrée jusqu'à un point 28 de sortie. A cet effet, le dispositif 10 d'orientation comporte un support 30 mobile sur lequel au moins une pince 32 est embarquée.

Dans l'exemple représenté à la figure 1, le support 30 mobile est formé par une roue 30 qui est montée rotative autour d'un axe "B" vertical central. La roue 30 est destinée à être entraînée en rotation, selon le sens indiqué par la flèche "F", par des moyens d'entraînement non représentés.

La roue 30 comporte une pluralité de pinces 32 de préhension du récipient 12 par l'extérieur qui sont réparties régulièrement sur sa périphérie. Toutes les pinces 32 étant identiques, pour la clarté des dessins, seule une pince 32 de préhension a été représentée.

Les pinces 32 tournent de manière solidaire avec la roue 30. En d'autres termes, les pinces 32 sont mobiles le long d'une trajectoire fermée, ici circulaire. De cette manière, chaque récipient 12 saisi par une pince 32 est transporté depuis le point 26 d'entrée jusqu'au point 28 de sortie en suivant une trajectoire en arc de cercle. La trajectoire de la pince 32 présente ainsi une première section dite "utile" sur laquelle elle transporte un récipient 12 vers le point 28 de sortie, et une section dite "de retour", sur laquelle la pince circule à vide vers le point 26 d'entrée.

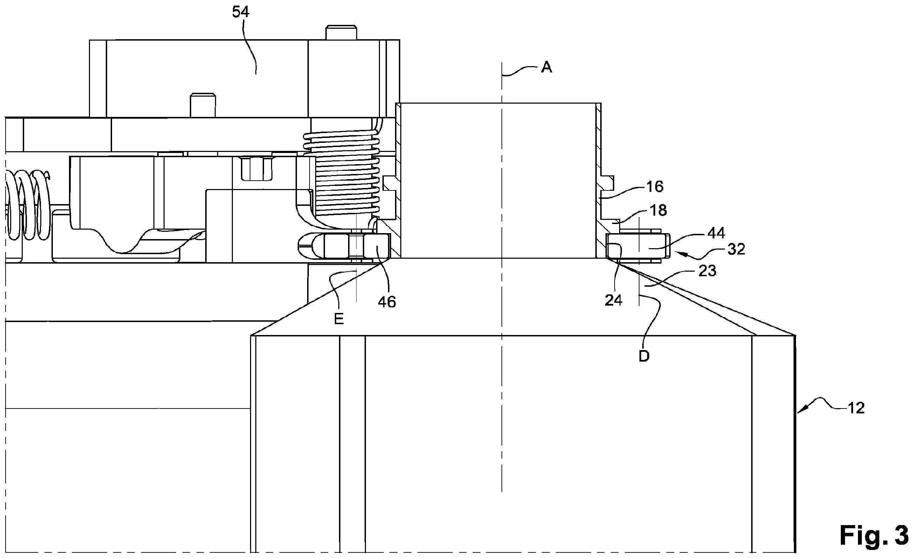

Comme représenté à la figure 3, chaque pince 32 est destinée à saisir le récipient 12 en serrant le col 16 au niveau du tronçon 24 de préhension. Ceci permet de bloquer verticalement le récipient 12 dans les deux sens par butée de mors de la pince 32 contre la collerette 18 inférieure, d'une part, et contre l'épaulement 23, d'autre part.

En variante non représentée de l'invention, la roue est remplacée par une chaîne ou par tout autre support mobile connu sur lequel des pinces identiques sont embarquées.

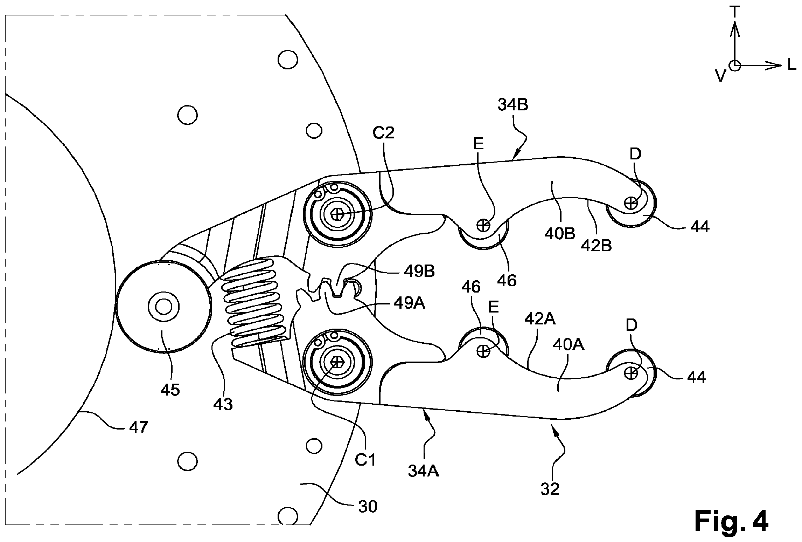

La pince 32 de préhension a été représentée plus en détails à la figure 4. La pince 32 de préhension comporte ici une première branche 34A et une deuxième branche 34B longitudinales. Les branches 34A, 34B sont orientée globalement radialement par rapport à l'axe "B" de la roue 30 de manière qu'une extrémité avant libre de chaque branche 34A, 34B soit agencée radialement en saillie par rapport à la périphérie de la roue 30.

La première branche 34A est montée pivotante sur la roue 30 autour d'un axe vertical "C1" de pivotement qui traverse la branche 34A globalement en son milieu.

De même, la deuxième branche 34B est montée pivotante sur la roue 30 autour d'un axe vertical "C2" de pivotement qui traverse la branche 34B globalement en son milieu.

Les deux axes "C1, C2" de pivotement sont décalés transversalement l'un par rapport à l'autre. Les deux branches 34A, 34B sont agencés dans un même plan horizontal.

L'extrémité avant libre 36A, 36B de chaque branche comporte un mors 40A, 40B associé. Chaque mors 40A, 40B comporte une face 42A, 42B interne incurvée de manière concave qui est agencée transversalement en vis-à-vis de la face 42B, 42A interne de l'autre mors 40B, 40A.

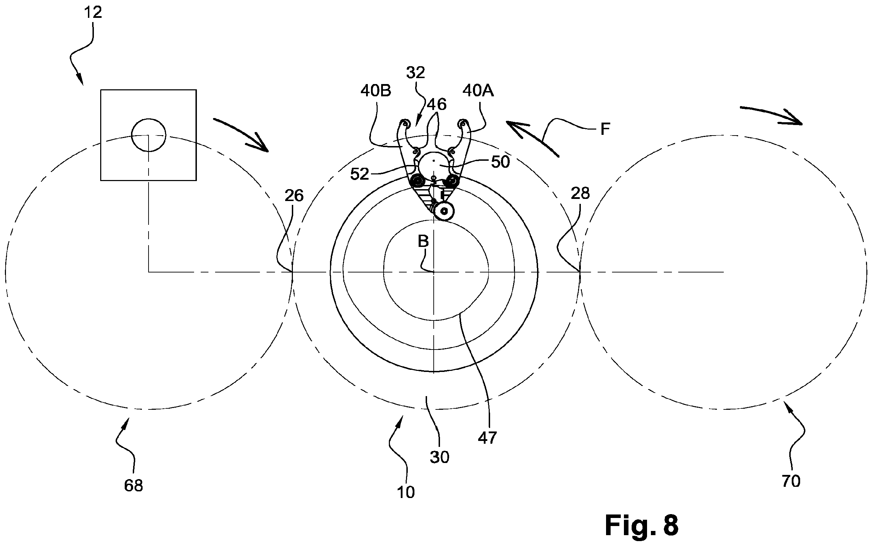

La pince 32 est ainsi commandée entre :
- une première position de pincement du récipient 12, telle que représentée à la figure 4, dans laquelle les deux mors 40A, 40B sont rapprochés transversalement l'un de l'autre de manière que les faces internes 42A, 42B des mors 40A, 40B embrassent le tronçon 24 de préhension du récipient comme cela est illustré à la figure 1 ; et
- une position de relâchement du récipient 12, telle que représentée à la figure 8, dans laquelle les mors 40A, 40B sont écartés transversalement l'un de l'autre pour relâcher ledit récipient 12.

La pince 32 est rappelée élastiquement vers sa position de pincement au moyen d'un organe 43 élastique qui est interposé entre les deux branches 34A, 34B. L'organe 43 élastique est ici formé par un ressort hélicoïdal qui est interposé transversalement entre deux tronçons de branches 34A, 34B qui sont situés en arrière des axes C1, C2 de pivotement. L'organe 43 élastique tend ainsi à écarter les deux tronçons de branches 34A, 34B, rapprochant ainsi les deux mors 40A, 40B par effet de levier.

L'ouverture de la pince 32 vers sa position de relâchement est commandée par un suiveur 45 de came, ici un galet suiveur, qui coopère avec une came 47, dite came 47 de préhension par la suite. La came 47 de préhension est fixe. Ainsi la roue 30 tourne par rapport à la came 47 de préhension.

Le galet 45 suiveur de came est agencé à une extrémité arrière de la deuxième branche 34B. La première branche 34A est commandé en pivotement dans un sens contraire à celui de la deuxième branche 34B par l'intermédiaire de secteurs dentés 49A, 49B qui sont centré sur les axes "C1", "C2" respectivement. Ainsi, lors de la rotation de la roue 30, le galet suiveur 45 de came roule sur la came 47 de préhension pour commander le pivotement de la deuxième branche 34B vers sa position de relâchement, ce mouvement étant transmis à la première branche 34A par l'intermédiaire des secteurs 49A, 49B dentés. Le galet suiveur 45 de came est maintenu en contact avec la came 47 de préhension par l'organe 43 élastique.

Le récipient 12 ainsi saisi par la pince 32 est destiné à être pivoté autour de son axe "A" principal de manière que son corps 14 se présente sous une orientation adéquate pour la prochaine opération, par exemple une opération d'étiquetage. Ainsi, dans l'exemple représenté aux figures, il est important d'orienter correctement le récipient 12 pour qu'une étiquette soit collée contre une face plane du corps 14 sans chevaucher d'arête verticale.

A cet effet, en position de pincement des mors 40A, 40B, le récipient 12 est guidé en rotation autour de son axe "A" par rapport aux mors 40A, 40B. Dans l'exemple représenté aux figures, le récipient 12 est plus particulièrement reçu roulant entre les mors 40A, 40B de la pince 32.

En variante, les mors comportent des faces de glissement qui sont destinées à guider le récipient en rotation par glissement.

A cet égard, chaque mors 40A, 40B comporte au moins un galet de roulement qui fait saillie radialement vers l'intérieur par rapport à sa face 42A, 42B interne pour guider en rotation du récipient 12 pincé par les mors 40A, 40B. Le col 16 est ainsi en contact uniquement avec les galets de roulement des mors 40A, 40B lorsqu'ils occupent leur position de pincement.

Dans l'exemple représenté aux figures, et notamment à la figure 4, chaque mors 40A, 40B est muni de deux galets de roulement.

Un galet 44 de guidage est monté libre en rotation autour d'un axe "D" vertical à une extrémité avant libre du mors 40A, 40B associé. Ce galet 44 de guidage comporte un segment circulaire qui fait saillie transversalement par rapport à la face 42A, 42B interne du mors 40A, 40B associé. Ainsi, comme cela est visible à la figure 3, le segment circulaire en saillie du galet 44 de guidage vient directement en contact avec le tronçon 24 de préhension du récipient 12 lorsque la pince 32 occupe sa position de pincement.

La pince 32 comporte ainsi deux galets 44 de guidage, un pour chaque mors 40A, 40B. Les deux galets de guidage sont agencés dans un même plan horizontal.

Un galet 46 d'entraînement est monté libre en rotation autour d'un axe vertical "E" à l'extrémité arrière de la face 42A, 42B interne du mors 40A, 40B associé. Ce galet 46 d'entraînement comporte un segment circulaire qui fait saillie transversalement par rapport à la face 42A, 42B interne du mors 40A, 40B associé. Ainsi, comme cela est visible à la figure 3, le segment circulaire en saillie du galet 46 d'entraînement vient directement en contact avec le tronçon 24 de préhension du récipient 12 lorsque la pince 32 occupe sa position de pincement.

La pince 32 comporte ainsi deux galets 46 d'entraînement, un pour chaque mors 40A, 40B. Les deux galets 46 d'entraînement sont agencés dans un même plan horizontal.

En position de pincement de la pince 32, le tronçon 24 de préhension du récipient 12 est ainsi en contact uniquement avec les galets 44, 46. Le récipient 12 est ainsi porté en coopération par les galets 46 d'entraînement et par les galets 44 de guidage. Un espace radial est ainsi réservé entre la face 42A, 42B interne de chaque mors 40A, 40B pour favoriser la rotation sans frottement du récipient 12 autour de son axe "A" par rapport aux mors 40A, 40B.

Ainsi, les galets 46 d'entraînement ont une fonction d'entraînement en rotation du récipient 12, d'une part, et une fonction de support du récipient 12, d'autre part.

En position de relâchement de la pince 32, les mors sont écartés transversalement l'un de l'autre. La paire de galets 44 de guidage est ainsi écartée transversalement, de même que la paire de galets 46 d'entraînement, permettant ainsi la libération du récipient 12 saisi, ou l'accueil d'un nouveau récipient 12.

Chaque galet 44, 46 présente une jante qui est réalisée en un matériau qui favorise le roulement par friction dudit galet 44, 46 contre le tronçon 24 de préhension du récipient. Ainsi, tant que le récipient 12 ne rencontre aucun obstacle empêchant sa rotation, les galets 46 d'entraînement roulent sans glissement contre le tronçon 24 de préhension.

En variante non représentée de l'invention, les galets de guidage sont remplacés par des faces de glissement des mors qui sont destinées à guider le récipient en rotation par glissement.

Le dispositif 10 est aussi équipé d'un organe 48 commandé de mise en rotation simultané des galets 46 d'entraînement. Ainsi, le récipient 12 est mis en rotation simultanément par les deux galets 46 d'entraînement. Ceci permet de garantir le déclenchement de la mise en rotation du récipient 12 par friction des galets 46 d'entraînement.

En outre, chaque mors 40A, 40B est équipé d'un galet 46 d'entraînement associé. Ainsi, les deux galets 46 d'entraînement sont décalés circonférentiellement l'un par rapport à l'autre autour de l'axe "A" du récipient 12. Ceci permet de garantir une bonne stabilité du récipient 12 lors de sa mise en rotation.

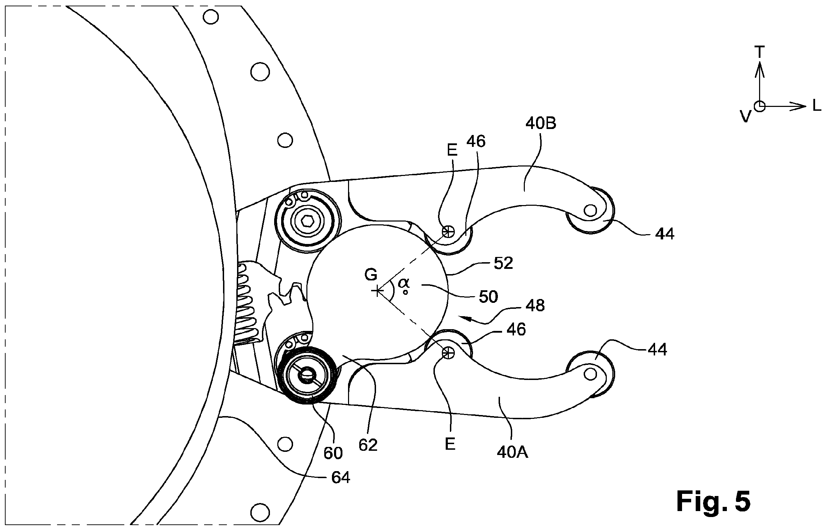

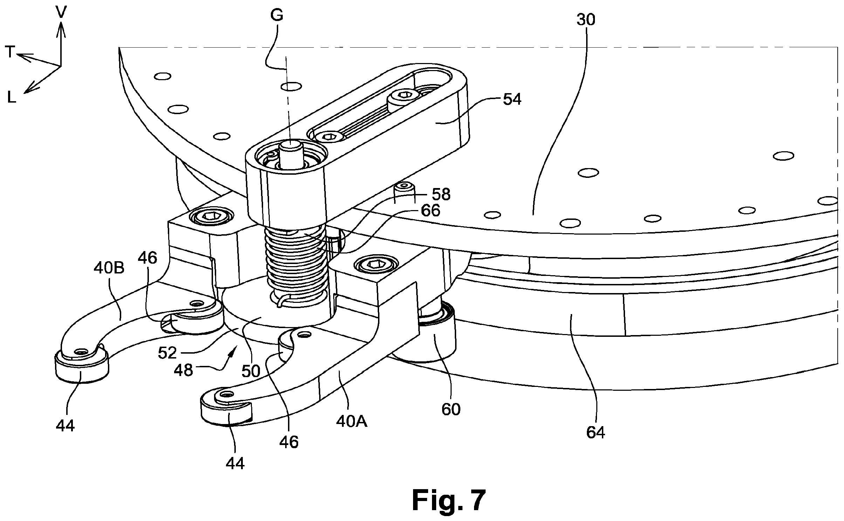

Comme représenté aux figures 5 à 7, chaque pince 32 comporte un organe 48 associé de mise en rotation. L'organe 48 de mise en rotation comporte un élément 50 qui est monté tournant sur la roue 30 autour d'un axe "G" vertical. L'axe "G" est agencé à équidistance des deux galets 46 d'entraînement. L'élément 50 tournant est ainsi mobile solidairement avec la pince 32.

L'élément 50 tournant comporte au moins deux faces périphériques en arc de cercle dont chacune est destinée à rouler sans glissement contre un galet 46 d'entraînement associé lorsque la pince 32 occupe sa position de pincement. Dans l'exemple représenté aux figures, l'élément 50 tournant présente une jante 52 annulaire centrée sur l'axe "G".

L'axe "G" est ici agencé longitudinalement en arrière des galets 46 d'entraînement et le diamètre de la jante 52 est supérieur à la distance transversale qui sépare les deux galets 46 d'entraînement.

Les galets 46 d'entraînement sont en contact avec cette jante 52 annulaire lorsque la pince 32 occupe sa position de pincement. Les points de contact de la jante 52 avec les galets 46 d'entraînement forme ici un angle "a" inférieur à 180°, ici d'environ 30°, par rapport à l'axe "G" de l'élément 50 tournant.

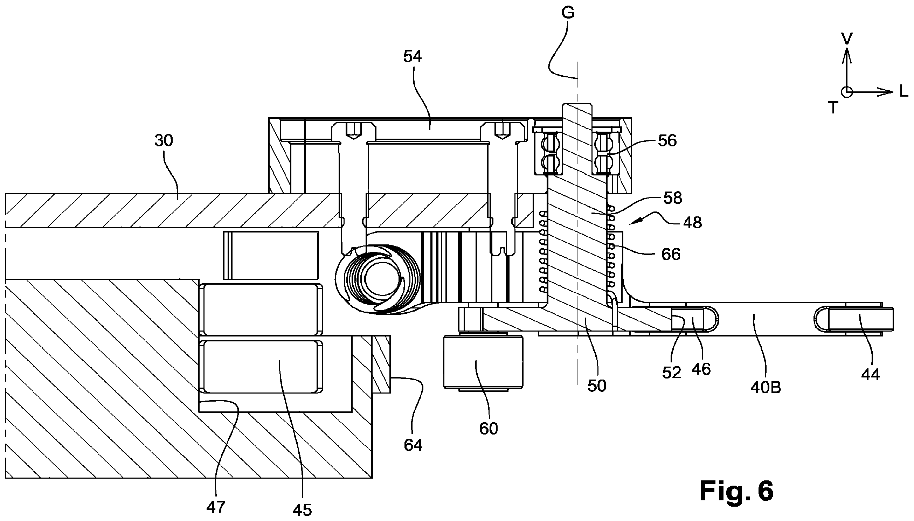

Comme indiqué à la figure 6, l'élément 50 tournant est monté sur la roue 30 par l'intermédiaire d'un bras 54 longitudinal qui est fixé sur une face supérieure de la roue 30. Une extrémité avant du bras 54 qui porte un pallier 56 de roulement s'étend en saillie par rapport au bord périphérique de la roue 30. L'élément 50 tournant comporte un arbre 58 central vertical d'axe "G" qui est reçu dans le pallier 56. L'élément 50 tournant est ainsi agencé sous la roue 30, au même niveau que les galets 46 d'entraînement.

L'organe 48 de mise en rotation comporte aussi un maneton 60 qui est fixé sur l'élément 50 tournant de manière excentrique par rapport à l'axe "G" de rotation. Le maneton 60 est plus particulièrement agencé sous la roue 30, en arrière de l'axe "G" de rotation de l'élément 50 tournant. A cet effet, l'élément tournant présente un bras 62 de manivelle qui s'étend radialement en saillie par rapport à la jante 52 annulaire. Le maneton 60 est porté par une extrémité libre du bras 62 de manivelle.

Le maneton 60 est ici formé par un galet libre en rotation autour d'un axe vertical.

Le dispositif 10 comporte aussi une came 64 qui permet de commander le pivotement de l'élément 50 tournant par roulement du maneton 60 sur le chemin de came 64 lors du déplacement de la pince 32 le long de sa trajectoire. Cette came 64 sera appelée par la suite "came 64 d'orientation". La came 64 d'orientation est fixe par rapport à la came 47 de préhension.

L'élément 50 tournant est aussi muni de moyens de rappel élastiques qui contraignent le maneton 60 contre la came 64 d'orientation et qui rappellent l'élément 50 tournant dans une position angulaire de repos. Ces moyens de rappel sont formés par un ressort 66 de torsion à spirales qui est agencé autour de l'arbre 58. Le ressort 66 de torsion est interposé verticalement entre le bras 54 et l'élément 50 tournant. Une extrémité inférieure du ressort 66 de torsion est fixée à l'élément 50 tournant tandis qu'une extrémité supérieure est fixée au bras 54, le bras 54 étant fixe par rapport à la roue 30.

La came 64 d'orientation est conçue pour faire pivoter l'élément 50 tournant sur une course angulaire délimitée entre une première position angulaire extrême et une deuxième position angulaire extrême. Ces deux positions angulaires extrêmes sont agencées au-delà de la position de repos de l'élément 50 tournant de sorte que le maneton 60 est constamment contraint contre la came 64 d'orientation sur toute la trajectoire de la pince 32. Cette course angulaire permet d'entraîner les galets 46 d'entraînement pour faire pivoter le récipient 12 d'un angle inférieur à 360° autour de son axe. Généralement, un pivotement d'un angle inférieur à 180°, voire inférieur à 90°, est suffisant pour mettre le récipient 12 dans l'orientation adéquate pour la prochaine opération, par exemple pour l'opération d'étiquetage.

Selon une première variante non représentée de l'invention, le pivotement du récipient autour de son axe est limité par des moyens de butée qui sont mobiles solidairement avec la pince 32 et qui sont destinés à coopérer avec une face de butée portée par le récipient. La face de butée du récipient est par exemple portée par un doigt de butée qui fait saillie radialement du tronçon de préhension du récipient et qui est apte à venir en butée contre l'un des galets de guidage ou d'entraînement. Les moyens de butée de la pince sont donc formés par les galets. Dans ce cas, lorsque le doigt de butée arrive en butée contre un galet tandis que les galets d'entraînement tournent toujours, les galets d'entraînement se mettent à tourner en glissant contre le tronçon de préhension car le pivotement du récipient est empêché par ledit doigt de butée. Le récipient est alors immobilité dans une position angulaire déterminée.

Selon une deuxième variante non représentée de l'invention, les moyens de butée sont formés par une face portée par la roue 30. Ils coopèrent avec un tronçon non circulaire du corps du récipient pour bloquer sa rotation à l'encontre du pivotement imposé par la rotation des galets d'entraînement.

Il arrive en outre que le dispositif 10 d'orientation soit amené à être utilisé pour des séries de récipients 12 présentant différentes dimensions de col 16. Or, en fonction de la dimension du col 16, les mors 40A, 40B en position de pincement seront plus ou moins rapprochés l'un de l'autre. A cet effet, il est nécessaire de régler la position longitudinale de l'élément 50 tournant :
- pour que les mors 40A, 40B puisse pincer efficacement le col 16 du récipient 12, et notamment pour que les galets 16 d'entraînement soit en contact avec le tronçon 24 de préhension du récipient ;
- et pour que la jante 52 de l'élément 50 tournant soit en contact avec les galets 16 d'entraînement lorsque la pince 32 occupe sa position de pincement.

Pour résoudre ce problème, le dispositif 10 comporte des moyens de réglage de la position longitudinale de l'élément 50 tournant par rapport à la pince 32 associée. Dans le mode de réalisation représenté aux figures, le bras 54 qui porte l'élément 50 tournant est monté coulissant longitudinalement sur la roue 30. Ainsi, il est possible de régler la position longitudinale de l'élément 50 tournant lors d'un changement de format de récipients 12. Pour ce faire, le bras 54 présente une lumière longitudinale qui est traversée de deux vis de fixation. En desserrant les vis de fixation il est possible de coulisser le bras 54.

En variante non représentée de l'invention, le dispositif comporte aussi des moyens de réglage de l'amplitude de la course angulaire de l'élément tournant.

Selon une première variante, la position du maneton est réglable selon une direction radiale par rapport à l'axe de rotation de l'élément tournant. Ceci permet ainsi de faire varier l'amplitude de la course angulaire proportionnellement à la distance radiale entre le maneton et l'axe de rotation de l'élément tournant.

Selon une deuxième variante qui est susceptible d'être combinée avec la première variante, au moins une section de la came d'orientation est mobile transversalement par rapport à la direction de déplacement de la pince.

On décrit à présent le fonctionnement du dispositif 10 d'orientation en référence aux figures 8 à 12.

On a représenté à la figure 8 la pince 32 se déplaçant le long de sa trajectoire circulaire entre le point 28 de déchargement et le point 26 d'entrée. La pince 32 ne porte alors aucun récipient. Les mors 40A, 40B sont écartés dans leur position de relâchement sous l'effet de l'organe 43 élastique (non représenté sur cette figure pour des raisons de clarté).

Dans cette position, les galets 46 d'entraînement sont écartés de la jante 52 de l'élément 50 tournant. L'élément 50 tournant occupe une première position angulaire extrême, dite position angulaire d'entrée, vers laquelle il est rappelé par le ressort 66 de torsion.

Un récipient 12 est transporté par un dispositif 68 de transport amont, par exemple une roue de transfert, jusqu'au point 26 d'entrée.

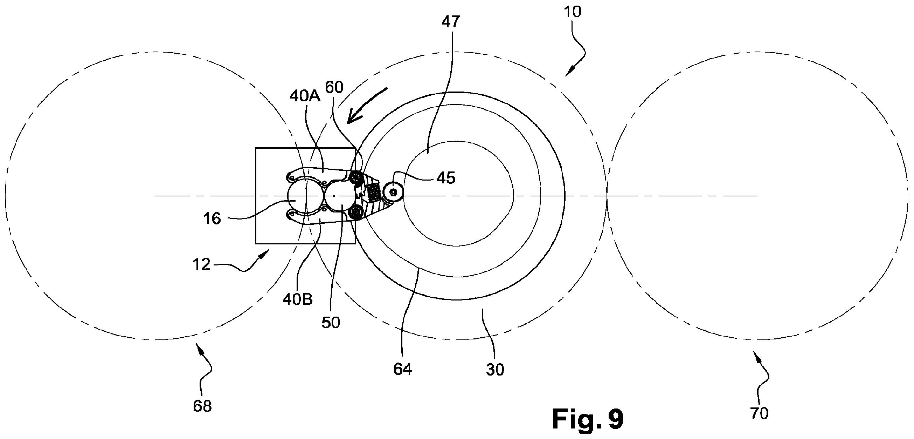

Comme représenté à la figure 9, le récipient 12 et la pince 32 arrivent simultanément au point 26 d'entrée de sorte que le col 16 du récipient 12 soit reçu entre les mors 40A, 40B. Les mors 40A, 40B sont alors commandé par le galet 45 suiveur de came et par la came 47 de préhension en position de pincement du tronçon 24 de préhension du récipient à l'encontre de l'effort de rappel élastique de l'organe 43 élastique.

Chaque galet 46 d'entraînement entre alors simultanément en contact avec le tronçon 24 de préhension, d'une part, et avec la jante 52 de l'élément 50 tournant, d'autre part.

Le récipient 12 est ainsi tenu par la pince 32, et guidé en rotation, par l'intermédiaire des galets 44 de guidage et des galets 46 d'entraînement.

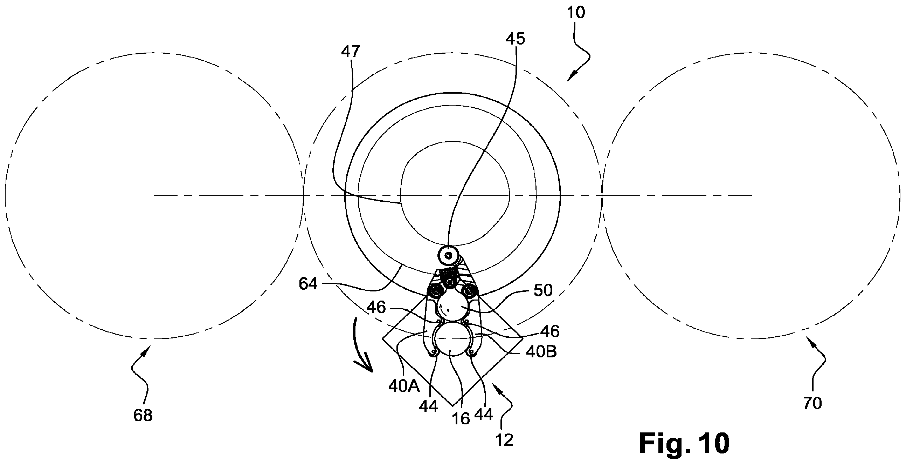

Comme représenté à la figure 10, la pince 32 poursuit sa trajectoire en direction du point 28 de sortie en emportant le récipient 12. L'élément 50 tournant est pivoté de sa course angulaire déterminée jusqu'à sa deuxième position angulaire extrême, dite position angulaire de sortie, par le maneton 60 roulant sur la came 64 d'orientation. Dans l'exemple représenté aux figures, la deuxième position angulaire de sortie est plus proche de la position angulaire de repos que la position angulaire d'entrée. Ainsi, la came 64 d'orientation s'éloigne radialement de la trajectoire de l'axe "G" de rotation de l'élément 50 tournant lors de ce déplacement.

Ce pivotement dans un sens horaire de l'élément 50 tournant est transmis au récipient 12 par l'intermédiaire des galets 46 d'entraînement pour faire tourner le récipient 12 d'un angle déterminé, ici environ 45°, dans un sens antihoraire.

Pendant ce temps, la pince 32 demeure en position de pincement.

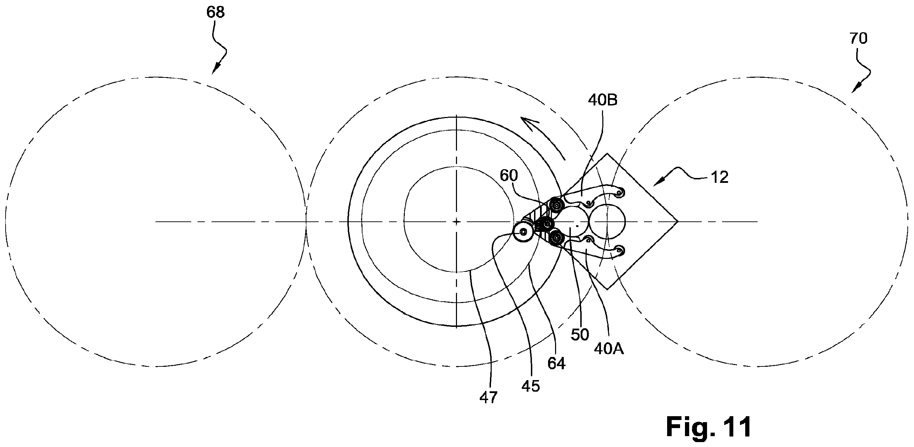

Puis, comme cela est représenté à la figure 11, la pince 32 finit la section utile de sa trajectoire en arrivant au point 28 de sortie. La came 64 d'orientation maintien l'élément 50 tournant dans sa position angulaire de sortie, tandis que la came 47 de préhension commande l'ouverture de la pince 32 en position de relâchement.

Le récipient 12 ainsi orienté correctement est transmis à un dispositif 70 de transport aval, par exemple une deuxième roue de transfert ou un carrousel d'une station d'étiquetage.

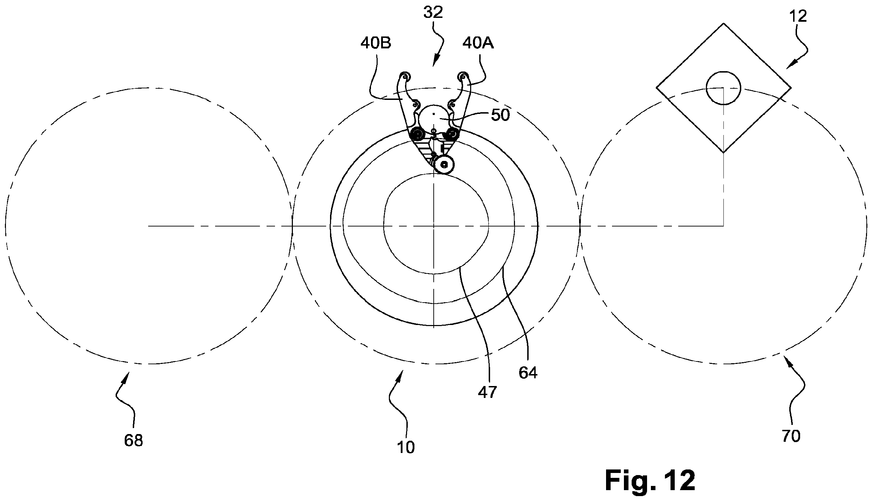

Ensuite, comme représenté à la figure 12, pendant que le récipient 12 est pris en charge par le dispositif 70 de transport aval, la pince 32 poursuit son déplacement sur la section "de retour" de sa trajectoire. La pince 32 demeure en position de relâchement tandis que la came 64 d'orientation permet de commander, par l'intermédiaire du maneton 60, l'élément 50 tournant vers sa première position angulaire d'entrée à l'encontre de l'effort de rappel élastique du ressort 66 de torsion.

Le dispositif 10 d'orientation réalisé selon les enseignements de l'invention permet ainsi de faire pivoter chaque récipient 12 de manière fiable et stable grâce à un dispositif peu onéreux et simple à réaliser.

## Revendications

1. Dispositif (10) d'orientation d'au moins un récipient (12) autour de son axe (A) d'orientation verticale pour un récipient (12) comportant un corps (14) inférieur ouvert vers le haut par l'intermédiaire d'un col (16) qui présente une face (17) externe de forme globalement cylindrique de section transversale circulaire centrée sur l'axe "A" principal du récipient (12) et qui comporte à sa base une collerette (18) inférieure et une deuxième collerette (20) supérieure qui font toutes les deux saillie radialement par rapport à la face (17) externe, les deux collerettes (18,20) étant écartées verticalement de manière à définir une gorge (22), et la transition entre le corps (14) et le col (16) étant formé par un épaulement (23) pyramidale à sa base et conique à son extrémité supérieure, ledit récipient étant muni d'un tronçon (24) de préhension délimité entre la collerette (18) inférieure et l'épaulement (23) ou par le fond de la gorge (22) définie entre les deux collerettes (18,20), ledit tronçon (24) de préhension ayant une face (17) externe et présentant une forme cylindrique de révolution centrée sur l'axe (A) du récipient, le dispositif (10) comportant au moins une pince (32) de préhension du récipient (12) montée mobile le long d'une trajectoire déterminée, la pince (32) comportant au moins deux mors (40A, 40B) susceptibles d'occuper une première position de pincement du tronçon (24) de préhension et une position de relâchement du récipient (12) ;
le dispositif comportant un organe (48) commandé de mise en rotation d'un premier galet (46) d'entraînement pour faire pivoter le récipient (12) d'un angle inférieur à 360° ;
**caractérisé en ce que en ce que** le tronçon (24) de préhension est guidé en rotation autour de son axe (A) par rapport aux mors (40A, 40B) lorsque les deux mors occupent la première position de pincement du tronçon (24) de préhension, ledit premier galet (46) d'entraînement étant un galet d'entrainement en rotation du récipient saisi par la pince (32) par roulement dudit galet (46) d'entraînement contre le tronçon (24) de préhension ; et
**en ce que** la pince (32) comporte ledit organe commandé de mise en rotation du premier galet d'entraînement et comporte un deuxième galet (46) d'entraînement en rotation du récipient (12) saisi par la pince (32) par roulement sans glissement du deuxième galet (46) contre le tronçon (24) de préhension.

2. Dispositif (10) selon la revendication précédente, **caractérisé en ce que** le deuxième galet (46) d'entraînement est décalé circonférentiellement par rapport au premier galet (46) d'entraînement.

3. Dispositif (10) selon la revendication précédente, **caractérisé en ce que** le deuxième galet (46) d'entraînement est agencé dans un même plan que le premier galet (46) d'entraînement.

4. Dispositif (10) selon l'une quelconque des revendications précédentes, **caractérisé en ce que** le premier galet (46) d'entraînement et le deuxième galet (46) d'entraînement sont mis simultanément en rotation par ledit organe (48) de mise en rotation.

5. Dispositif (10) selon l'une quelconque des revendications précédentes, **caractérisé en ce que** l'organe (48) de mise en rotation comporte un élément (50) tournant autour d'un axe (G) vertical qui est mobile solidairement avec la pince (32), et qui comporte au moins deux faces (52) périphériques en arc de cercle dont chacune est destinée à rouler sans glissement contre un galet (46) d'entraînement associé lorsque la pince (32) occupe sa position de pincement.

6. Dispositif (10) selon la revendication précédente, **caractérisé en ce que** l'organe (48) de mise en rotation comporte un maneton (60) qui est agencé de manière excentrique par rapport à l'axe (G) de rotation de l'élément (50) tournant, le dispositif (10) comportant aussi une came (64) fixe qui permet de commander la rotation de l'élément (50) tournant par contact du maneton (60) avec la came (64) lors du déplacement de la pince (32) le long de sa trajectoire, l'élément (50) tournant étant muni de moyens (66) de rappel élastiques qui contraignent le maneton (60) contre la came (64).

7. Dispositif (10) selon l'une quelconque des revendications précédentes, **caractérisé en ce que** la pince (32) est destinée à saisir le récipient (12) par son col (16).

8. Dispositif (10) selon l'une quelconque des revendications précédentes, **caractérisé en ce que** les mors comportent des faces de glissement qui sont destinées à guider le récipient en rotation par glissement.

9. Dispositif (10) selon l'une quelconque des revendications 1 à 8, **caractérisé en ce que** les mors (40A, 40B) comportent au moins un galets (44) de guidage libres en rotation qui est destiné à guider le récipient (12) en rotation de manière roulante par rapport à la pince (32).

10. Dispositif (10) selon la revendication précédente, **caractérisé en ce que** les galets (44) de guidage sont agencés au même niveau que les galets (46) d'entraînement, le récipient (12) étant porté en coopération par les galets (46) d'entraînement et par les galets (44) de guidage.

11. Dispositif (10) selon l'une quelconque des revendications précédentes, **caractérisé en ce qu'**il comporte des moyens (54) de réglage de la position de l'élément (50) tournant par rapport à la pince (32) associée.

12. Dispositif (10) selon l'une quelconque des revendications précédentes, **caractérisé en ce que** les pinces (32) sont mobiles le long d'une trajectoire fermée, et **en ce que** la came (64) est conçue pour faire pivoter l'élément (50) tournant sur une course angulaire délimitée entre une première position angulaire extrême et une deuxième position angulaire extrême.

13. Dispositif (10) selon l'une quelconque des revendications précédentes, **caractérisé en ce qu'**il est équipé de moyens de butée en pivotement du récipient qui sont destinés à coopérer avec une face de butée du récipient pour arrêter son pivotement dans une position angulaire déterminée.

## Patentansprüche

1. Vorrichtung (10) zum Ausrichten mindestens eines Behälters (12) um seine vertikale Ausrichtungsachse (A) für einen Behälter (12), der einen unteren Körper (14) umfasst, der über einen Hals (16) nach oben offen ist, der eine Außenfläche (17) von insgesamt zylindrischer Form mit kreisförmigem Querschnitt, der auf die Hauptachse *"*A*"* des Behälters (12) zentriert ist, aufweist und der an seiner Basis einen unteren Kragen (18) und einen zweiten, oberen Kragen (20) umfasst, die beide radial bezüglich der Außenfläche (17) vorragen, wobei die beiden Kragen (18, 20) vertikal beabstandet sind, so dass sie eine Auskehlung (22) definieren, wobei der Übergang zwischen dem Körper (14) und dem Hals (16) durch eine Schulter (23) gebildet wird, die an ihrer Basis pyramidenförmig und an ihrem oberen Ende konisch ist, wobei der Behälter über einen Greifabschnitt (24) verfügt, der zwischen dem unteren Kragen (18) und der Schulter (23) begrenzt ist oder durch den Boden der Auskehlung (22), die zwischen den beiden Kragen (18, 20) definiert ist, wobei der Greifabschnitt (24) eine Außenfläche (17) hat und eine zylindrische Rotationsform aufweist, die auf die Achse (A) des Behälters zentriert ist, wobei die Vorrichtung (10) mindestens eine Klemme (32) zum Greifen des Behälters (12) umfasst, die entlang einer bestimmten Bahn bewegbar montiert ist, wobei die Klemme (32) mindestens zwei Backen (40A, 40B) umfasst, die eine erste Position zum Klemmen des Greifabschnitts (24) und eine Position zum Freigeben des Behälters (12) einnehmen können;
wobei die Vorrichtung ein gesteuertes Organ (48) zum Drehen einer ersten Antriebsrolle (46) umfasst, um den Behälter (12) um einen Winkel kleiner als 360° zu schwenken;
**dadurch gekennzeichnet, dass** der Greifabschnitt (24) in Bezug auf die Backen (40A, 40B) um seine Achse (A) drehbar geführt wird, wenn die zwei Backen die erste Position zum Klemmen des Greifabschnitts (24) einnehmen, wobei die erste Antriebsrolle (46) eine Antriebsrolle zum Drehen des durch die Klemme (32) gehaltenen Behälters durch Abwälzen der Antriebsrolle (46) auf dem Greifabschnitt (24) ist; und
**dass** die Klemme (32) das gesteuerte Organ (48) zum Drehen der ersten Antriebsrolle umfasst und eine zweite Antriebsrolle (46) zum Drehen des durch die Klemme (32) gehaltenen Behälters (12) durch schlupffreies Abwälzen der zweiten Rolle (46) auf dem Greifabschnitt (24) umfasst.

2. Vorrichtung (10) nach dem vorhergehenden Anspruch, **dadurch gekennzeichnet, dass** die zweite Antriebsrolle (46) in Bezug auf die erste Antriebsrolle (46) in Umfangsrichtung versetzt ist.

3. Vorrichtung (10) nach dem vorhergehenden Anspruch, **dadurch gekennzeichnet, dass** die zweite Antriebsrolle (46) in einer gleichen Ebene wie die erste Antriebsrolle (46) angeordnet ist.

4. Vorrichtung (10) nach einem der vorhergehenden Ansprüche, **dadurch gekennzeichnet, dass** die erste Antriebsrolle (46) und die zweite Antriebsrolle (46) durch das Drehorgan (48) gleichzeitig in Drehung versetzt werden.

5. Vorrichtung (10) nach einem der vorhergehenden Ansprüche, **dadurch gekennzeichnet, dass** das Drehorgan (48) ein um eine vertikale Achse (G) rotierendes Element (50) umfasst, das gemeinsam mit der Klemme (32) bewegbar ist und das mindestens zwei kreisbogenförmige Umfangsflächen (52) umfasst, von denen jede dazu bestimmt ist, schlupffrei auf einer assoziierten Antriebsrolle (46) abzuwälzen, wenn die Klemme (32) ihre Klemmposition einnimmt.

6. Vorrichtung (10) nach dem vorhergehenden Anspruch, **dadurch gekennzeichnet, dass** das Drehorgan (48) einen Zapfen (60) umfasst, der in Bezug auf die Drehachse (G) des rotierenden Elements (50) exzentrisch angeordnet ist, wobei die Vorrichtung (10) ferner einen stationären Nocken (64) umfasst, mit dem die Drehung des rotierenden Elements (50) durch Kontakt des Zapfens (60) mit dem Nocken (64) gesteuert werden kann, wenn sich die Klemme (32) entlang ihrer Bahn bewegt, wobei das rotierende Element (50) über elastische Rückstellmittel (66) verfügt, die den Zapfen (60) gegen den Nocken (64) drängen.

7. Vorrichtung (10) nach einem der vorhergehenden Ansprüche, **dadurch gekennzeichnet, dass** die Klemme (32) dazu bestimmt ist, den Behälter (12) an seinem Hals (16) zu halten.

8. Vorrichtung (10) nach einem der vorhergehenden Ansprüche, **dadurch gekennzeichnet, dass** die Backen Gleitflächen umfassen, die dazu bestimmt sind, den Behälter durch Gleiten drehbar zu führen.

9. Vorrichtung (10) nach einem der Ansprüche 1 bis 8, **dadurch gekennzeichnet, dass** die Backen (40A, 40B) mindestens eine frei drehbare Führungsrolle (44) umfassen, die dazu bestimmt ist, den Behälter (12) in Bezug auf die Klemme (32) durch Abwälzen drehbar zu führen.

10. Vorrichtung (10) nach dem vorhergehenden Anspruch, **dadurch gekennzeichnet, dass** die Führungsrollen (44) auf derselben Höhe wie die Antriebsrollen (46) angeordnet sind, wobei der Behälter (12) von den Antriebsrollen (46) und von den Führungsrollen (44) gemeinsam getragen wird.

11. Vorrichtung (10) nach einem der vorhergehenden Ansprüche, **dadurch gekennzeichnet, dass** sie Mittel (54) zum Einstellen der Position des rotierenden Elements (50) in Bezug auf die assoziierte Klemme (32) umfasst.

12. Vorrichtung (10) nach einem der vorhergehenden Ansprüche, **dadurch gekennzeichnet, dass** die Klemmen (32) entlang einer geschlossenen Bahn bewegbar sind und dass der Nocken (64) dazu ausgelegt ist, das rotierende Element (50) auf einem winkelförmigen Weg, der zwischen einer ersten Winkelendlage und einer zweiten Winkelendlage liegt, zu schwenken.

13. Vorrichtung (10) nach einem der vorhergehenden Ansprüche, **dadurch gekennzeichnet, dass** sie mit Anschlagmitteln für das Schwenken des Behälters ausgerüstet ist, die dazu bestimmt sind, mit einer Anschlagfläche des Behälters zusammenzuwirken, um dessen Schwenkbewegung in einer bestimmten Winkelposition zu stoppen.

## Claims

1. Device (10) for orienting at least one container (12) about its axis (A) of vertical orientation for a container (12) comprising a lower body open at the top via a neck (16) that has an outer face (17) of cylindrical overall shape of circular cross section centred on the main axis "A" of the container (12) and that comprises at its base a lower collar (18) and a second, upper collar (20) that both protrude radially with respect to the outer face (17), the two collars (18, 20) being spaced apart vertically so as to define a groove (22), and the transition between the body (14) and the neck (16) being formed by a shoulder that is pyramidal at its base and conical at its upper end, said container being provided with a gripping portion (24) delimited between the lower collar (18) and the shoulder (23) or by the bottom of the groove (22) defined between the two collars (18, 20), said gripping portion (24) having an outer face (17) and being in the form of a cylinder of revolution centred on the axis (A) of the container, the device (10) comprising at least one gripper (32) for gripping the container (12), this gripper being mounted so as to be able to move along a given trajectory, the gripper (32) comprising at least two jaws (40A, 40B) that are able to adopt a first position of gripping the gripping portion (24) and a position of releasing the container (12);
the device comprising a controlled member (48) for rotating a first drive roller (46) in order to make the container (12) pivot through an angle of less than 360°;
**characterized in that** the gripping portion (24) is guided in rotation about its axis (A) with respect to the jaws (40A, 40B) when the two jaws adopt the first position of gripping the gripping portion (24), said first drive roller (46) being a roller for driving in rotation the container gripped by the gripper (32) by dint of said drive roller (46) rolling against the gripping portion (24);
**and in that** the gripper (32) comprises said controlled member for rotating the first drive roller and comprises a second roller (46) for driving in rotation the container (12) gripped by the gripper (32) by dint of the second roller (46) rolling against the gripping portion (24) in a slip-free manner.

2. Device (10) according to the preceding claim, **characterized in that** the second drive roller (46) is offset circumferentially with respect to the first drive roller (46).

3. Device (10) according to the preceding claim, **characterized in that** the second drive roller (46) is arranged in the same plane as the first drive roller (46) .

4. Device (10) according to any one of the preceding claims, **characterized in that** the first drive roller (46) and the second drive roller (46) are rotated simultaneously by said rotating member (48).

5. Device (10) according to any one of the preceding claims, **characterized in that** the rotating member (48) comprises an element (50) that turns about a vertical axis (G) which is able to move as one with the gripper (32), and which comprises at least two peripheral faces (52) in the shape of an arc of a circle, each face being intended to roll in a slip-free manner against an associated drive roller (46) when the gripper (32) is in its gripping position.

6. Device (10) according to the preceding claim, **characterized in that** the rotating member (48) comprises a crank pin (60) which is arranged off-centre with respect to the axis of rotation (G) of the turning element (50), the device (10) also comprising a fixed cam (64) which makes it possible to control the rotation of the turning element (50) by dint of the crank pin (60) contacting the cam (64) when the gripper (32) moves along its trajectory, the turning element (50) being provided with elastic return means (66) which urge the crank pin (60) against the cam (54).

7. Device (10) according to any one of the preceding claims, **characterized in that** the gripper (32) is intended to take hold of the container (12) by its neck (16) .

8. Device (10) according to any one of the preceding claims, **characterized in that** the jaws comprise sliding faces which are intended to guide the container in rotation by sliding.

9. Device (10) according to any one of Claims 1 to 8, **characterized in that** the jaws (40A, 40B) comprise at least one guide roller (44), the latter being free to rotate and intended to guide the container (12) in rotation by rolling with respect to the gripper (32).

10. Device (10) according to the preceding claim, **characterized in that** the guide rollers (44) are arranged at the same level as the drive rollers (46), the container (12) being borne in cooperation by the drive rollers (46) and by the guide rollers (44).

11. Device (10) according to any one of the preceding claims, **characterized in that** it comprises means (54) for adjusting the position of the turning element (50) with respect to the associated gripper (32).

12. Device (10) according to any one of the preceding claims, **characterized in that** the grippers (32) are able to move along a closed trajectory, and **in that** the cam (64) is designed to make the turning element (50) pivot over an angular travel that is delimited between a first end angular position and a second end angular position.

13. Device (10) according to any one of the preceding claims, **characterized in that** it is equipped with container pivoting abutment means which are intended to cooperate with an abutment face of the container in order to arrest its pivoting movement in a given angular position.
